# EUROPEAN PATENT APPLICATION

(11) **EP 2 541 183 A1**
(43) Date of publication of application: **02.01.2013**
(21) Application number: 11747776.0
(22) Date of filing: 20.01.2011
(51) Int. Cl.: F28F 3/00, F28D 9/00, B23K 1/008

(54) **METHOD FOR MANUFACTURING A PLATE HEAT EXCHANGER**

(30) Priority: 26.02.2010 RU 2010106744
(71) Applicant: Obschestvo S Ogranichennoi Otvetstvennostju "NBBK", Moscow 109428 (RU)
(72) Inventor: NOSKOVA, Irina Alekseevna, Moskovskaya obl. 140180 (RU); PASHKOV, Igor Nikolaevich, Moscow 109451 (RU); PASHKOV, Aleksey Igorevich, Moscow 109451 (RU); STRATONOVICH, Alexandr Nikolaevich, Moskovskaya obl. 140180 (RU)
(74) Representative: Grosse, Felix Christopher
(86) International application number: PCT/RU2011/000024
(87) International publication number: WO 2011/105927

(57) **Abstract**

A method for manufacturing a plate heat exchanger consists in punching plates, in each of which at least one projection having the form of a hollow truncated cone is formed; cleaning surfaces of the plates; composing a plate assembly by consecutively mounting the projection of one plate into corresponding opening of an adjacent plate, wherein a predetermined gap between adjacent surfaces of the plates is maintained and a channel for passing a heat carrier is formed. Further a soldering paste solution based on copper hydrocarbonate and nickel salts is prepared, into which the plate assembly is immersed; after that the applied soldering paste solution is dried. Furthermore the plate assembly is placed into a high-temperature through-type furnace in which a protective medium containing free hydrogen is provided; and two temperature zones are provided along the way of movement of the plate assembly, wherein annealing the plate assembly is performed in the first temperature zone, and soldering and covering the plate assembly with the copper-based alloy are performed in the second temperature zone. The claimed method allows manufacturing a high quality plate heat exchanger which is corrosion resistant and leak-tight in the areas of soldering, thus ensuring a long lifetime.

## Description

### Technical Field

The invention relates to methods for manufacturing heat exchanging means and more particularly relates to a method for manufacturing a plate heat exchanger.

### Background Art

It is a topical problem nowadays to make heat exchangers that meet all main operational requirements such as long lifetime, ability to withstand substantial change of pressure that is particularly important in view of commissioning when a heating season starts, ability to maintain strength properties at a negative environmental temperature, and ability to operate within open flame.

A method for manufacturing a lamellar-tubular heat exchanger is known from RU 2038563 Cl, the method consisting in applying a layer of solid lubricant represented by brass to surfaces of each plate, punching plates, wherein each plate is provided with projections in the form of a hollow truncated cone which is flanged afterwards. The plates are combined into a stack so as the projections of one plate engage recesses of the other plate, hereby channels for passing a heat carrier are provided. Then the stack of plates is placed into a through-type furnace in which soldering is performed at the temperature of 1100°C. Meanwhile the applied layer of brass constitutes the solder for soldering the plates within the stack.

According to the known method for manufacturing heat exchangers, it is difficult to maintain uniform thickness of the layer of brass applied to the metal plates, and that causes high scrape rate during punching the plates and assembling the heat exchanger. When thickness of the layer of brass is low, non-repairable scrap may occur in the form of crumpling, folding and other irregularities. When thickness of the layer of brass is high, a skew of the plates may occur up to touching adjacent plates. Quality and appearance of heat exchangers being made according to the known method for manufacturing are not good enough and are not up to date.

A method for manufacturing a lamellar heat exchanger is also known from "Izobretatel' i racionalizator" ("Inventor and Innovator") journal No. 10, 1988, page 18, the method being the closest prior art, wherein plates are punched, each plate is provided with projections in the form of a hollow truncated cone. The plates are then combined into a stack so as the projections of one plate engage recesses of the other plate, hereby channels for passing a heat carrier are provided. Then the stack of plates is immersed into a water solution of soldering paste, containing copper hydrocarbonate in the form of fine powder, and the stack of plates is further guided into a high-temperature through-type furnace in which soldering and covering the stack of plates with a copper-based alloy are performed at a temperature of 1100 to 1150°C.

However quality of the coating and correspondingly the strength properties and operational performance of a heat exchanger manufactured according to the above method are not up to date, which is explained as follows.

As a result of punching, the metal which the plates are made of is stressed, which causes increase of distance between grains of metal. If this stress is not relieved afterwards (i.e. the metal is not annealed), then during soldering process, melted copper may penetrate along boundaries of the metal grains forming cracks filled with solder. This causes decrease in strength and corrosion resistance of the heat exchanger plates.

Moreover, a stress spot occurs in the region of plastic strain, which causes plate deformation such as skewing and buckling, resulting in a change of thickness of walls of adjacent plates. Consequently, a gap between adjacent surfaces of the projections varies in some regions, which is negative for soldering quality. This may cause a seal failure in such regions during operation so the whole product is rejected.

During punching the plates, some lubricants are usually used. Most of the lubricants are oil-based and have to be removed before soldering. Even when oil-free lubricants are used (e.g. soap emulsions), inclusions in the form of dust, dirt, soot carbon and the like remain on surfaces of the plates. Traces of lubricant or particles of dirt on surfaces of the plates prevent the plates from being uniformly covered with a soldering paste solution causing decrease in quality of soldering joints and quality of coating.

It is very important for obtaining quality coating to prepare soldering paste and further prepare the stack of plates for soldering.

According to the known method, immediately after applying the soldering paste solution (i.e. with no prior drying), the stack of plates is placed into a through-type furnace in which a temperature of 1100 to1150°C (i.e. a temperature above the copper melting temperature) is maintained. At such a high temperature buckling and delamination of the coating derived from the soldering paste solution may occur in the entrance area of the through-type furnace, which further causes poor soldering the projections and low quality of coating of the plates.

Poor projection soldering causes corrosion, which reduces lifetime of the heat exchanger and fails to satisfy the requirements of reliability during testing and operation, especially in the case of sharp increase in heat carrier pressure.

Thus, quality and operational performance of a plate heat exchanger manufactured according to the known method are not satisfactory and are not up to date.

### Summary of the Invention

The purpose of the invention is to develop a method for manufacturing a plate heat exchanger, in which method, owing to preparing a plate assembly and providing proper soldering conditions within a high-temperature furnace, high quality of soldering and high quality of a copper-based alloy coating of the plate assembly surfaces are assured, and thus a long lifetime and high operational performance of the plate heat exchanger may be assured when the plate heat exchanger is manufactured according to the claimed method.

This purpose is achieved by the method for manufacturing a plate heat exchanger including punching plates, in each of which at least one projection having the form of a hollow truncated cone is provided; composing a plate assembly by consecutively mounting the projection of one plate into corresponding opening of an adjacent plate, wherein a predetermined gap between adjacent surfaces of the plates is maintained and a channel for passing a heat carrier is formed; preparing a soldering paste solution based on copper hydrocarbonate and nickel salts, into which the plate assembly is immersed; placing the plate assembly with applied soldering paste solution into a high-temperature through-type conveyor furnace in which soldering and covering the plate assembly with a copper-based alloy are performed during movement of the plate assembly, according to the invention, the method is characterized by comprising cleaning surfaces of each plate prior to composing the plate assembly; drying the applied soldering paste solution prior to placing the plate assembly into the high-temperature through-type conveyor furnace; providing a protective medium containing free hydrogen in the high-temperature through-type conveyor furnace; and providing two temperature zones along the way of movement of the plate assembly, wherein annealing the plate assembly is performed in the first temperature zone, and soldering and covering the plate assembly with the copper-based alloy are performed in the second temperature zone.

The claimed method allows manufacturing a high quality plate heat exchanger having corrosion resistance and leak tightness of soldered areas, which assures a long lifetime. A plate heat exchanger manufactured according to the claimed method is able to operate successfully even under conditions of sharp change in heat carrier pressure and corrosive environment.

It is expedient to dilute the soldering paste with water in order to acquire a density thereof of 1.85 to 1.95 g/ccm.

In order to provide quality soldering it is especially important to prepare the soldering paste solution having such density that the solution can be kept on the plate and on the projections and at the same time the solution can be distributed uniformly over the above-mentioned surfaces. It has been found experimentally that prepared solution having a density of 1.85 to 1.95 g/ccm complies with said requirements.

It is expedient to dry the applied soldering paste solution at a temperature not higher than 150°C.

It is desirable to dry the applied soldering paste solution in a forced-ventilation oven.

It is preferable to anneal the plate assembly in the first temperature zone at a temperature within the temperature range of 950 to 1050°C.

It is important to solder and cover the plate assembly with the copper-based alloy at a temperature within the range above the copper melting temperature but not higher than 1100°C.

It is desirable to clean surfaces of each plate using an alkaline cleaner or an acid cleaner.

It is expedient to set a movement speed of the plate assembly to be enough for annealing the plate assembly being performed in the first temperature zone and for covering the plate assembly with the copper-based alloy being performed in the second temperature zone.

It is preferable to set the movement speed of the plate assembly through the high-temperature through-type conveyor furnace to be within the range of 150 to 300 mm per minute.

It is expedient from technology point of view to cool down the plate assembly to a temperature not higher than 150°C in the cooling chamber of the high-temperature through-type conveyor furnace, after soldering and covering the plate assembly with the copper-based alloy.

High quality of the plate heat exchanger manufactured according to the claimed method is assured by careful preparation of the plate assembly for soldering, namely by cleaning lubricant and particles of dirt from the surfaces of the plates, drying the applied soldering paste solution, annealing the plate assembly, and providing conditions within the high-temperature through-type conveyor furnace for assuring quality soldering and quality covering the plate assembly with the copper-based alloy.

It is expedient, after cooling the plate assembly, to additionally immerse the plate assembly into a soldering paste solution based on copper hydrocarbonate and nickel salts, the soldering paste solution prepared by diluting the soldering paste with water to acquire a density thereof of 1.7 to 1.8 g/ccm, to dry the applied soldering paste solution at a temperature not higher than 150°C, to place the plate assembly into the high-temperature through-type conveyor furnace in which a protective medium containing free hydrogen is provided, and to additionally cover the plate assembly with the copper-based alloy at a temperature above the copper melting temperature but not higher than 1100°C.

The additional process cycle provides increased thickness and improved uniformity of the copper-based alloy coating of the plate assembly surfaces, and thus facilitates eliminating possible irregularities of the plate assembly surfaces (such as dimples and inclusions) and providing a uniform corrosion resistant coating.

The plate heat exchanger manufactured according to the present invention has high operational performance assured by high quality of the copper-based alloy coating of the plates and by reliable soldering the channels for passing a heat carrier.

The plate heat exchanger manufactured according to the claimed method is virtually insusceptible to corrosion and can be used under various environmental conditions including corrosive environment, for a long time.

The invention is further described in detail through an embodiment which is not limiting and exclusive, within the scope of the claimed method for manufacturing a plate heat exchanger.

### Brief Description of Drawings

The invention is explained with reference to the appended figures, where:
Fig. 1 is a scaled-up photograph of the surface of the plate heat exchanger manufactured according to the claimed method;
Fig. 2 is the same as Fig. 1 but after additional covering the plate assembly with a copper-based alloy.

### Best Mode for Carrying out the Invention

The claimed method for manufacturing a plate heat exchanger includes the following. Firstly, plates are punched, in each of the plates at least one projection having the form of a hollow truncated cone is formed. Then surfaces of each plate are cleaned, which cleaning is necessary due to presence of inclusions in the form of dust, dirt, soot carbon and the like on surfaces of the plates. The surfaces of the plates are cleaned using an alkaline cleaner or an acid cleaner, which facilitates forming a protective film on the plates, the protective film eliminating oxidizing metal of the plates during storage under outdoor conditions.

After cleaning, a plate assembly is composed by consecutively mounting the projection of one plate into corresponding opening of adjacent plate, wherein a predetermined gap between adjacent surfaces of the plates is maintained and a channel for passing a heat carrier is formed.

Then a soldering paste solution based on copper hydrocarbonate and nickel salts is prepared by diluting the soldering paste with water until a necessary density thereof is obtained.

In order to provide quality soldering it is especially important to prepare a soldering paste solution having such density that the solution can be kept on the plate and on the projections and at the same time the solution can be distributed uniformly over said surfaces. The amount of soldering paste should ensure that during soldering process, the reduced copper could fill the gaps between the projections, thus providing quality joint. It has been found experimentally that the optimal soldering paste solution density is in the range of 1.85 to 1.95 g/ccm. When the density is below 1.85 g/ccm, the amount of copper generated by thermal decomposition of the soldering paste solution during soldering process is not sufficient to obtain a dense joint. Using the soldering paste solution with the density over 1.95 g/ccm increases cost of the heat exchanger manufactured according to the claimed method.

A soldering paste including copper hydrocarbonate, nickel salts, water, and a binder such as ethylene glycol can be used as the soldering paste. The soldering paste is constituted by a thick cream-like substance of grayish-green to green color, which is to be diluted with water until the above-specified density is obtained.

The plate assembly is immersed into the prepared soldering paste solution that uniformly covers all surfaces of the plate assembly including projections, gaps between projections and channels for passing a heat carrier.

Then the plate assembly is retrieved from the soldering paste solution and the applied soldering paste solution is dried at a temperature not higher than 150°C, thus preventing buckling and delamination of the coating derived from the soldering paste solution in the high-temperature through-type furnace.

When the drying temperature is substantially lower than 150°C, the drying process is prolonged, which is undesirable in a large-scale production environment. When the drying temperature is higher than 150°C, evaporation of the binder (ethylene glycol) may start and it can further cause delamination of the coating in the high-temperature through-type furnace.

In order to speed up the drying process, it is expedient to perform drying in a forced-ventilation oven providing extraction of vaporized water.

After completion of drying the soldering paste solution, the plate assembly is placed into a high-temperature through-type furnace in which a protective medium containing free hydrogen is provided, wherein exogas or endogas may be used as the protective medium. Each of exogas and endogas is a mixture of gases, obtained by incomplete combustion of gaseous hydrocarbon in the air during exothermic or endothermic reaction correspondingly. Free hydrogen content of exogas is 7 to 16%, the same of endogas is below 30%, both options are sufficient for reducing copper salts and nickel salts. However, using exogas is preferable as a safer option from explosion hazard point of view.

At least two temperature zones are provided within the high-temperature through-type furnace along the way of movement of the plate assembly, wherein annealing the plate assembly is performed in the first temperature zone, and soldering and covering the plate assembly with the copper-based alloy are performed in the second temperature zone.

Annealing the plate assembly is performed at a temperature below the copper melting temperature and preferably within the range of 950 to 1050°C, wherein annealing is performed in order to relieve stress in metal. When the temperature is below 950°C, residual stress in metal of the plates may further cause penetration of copper melt along boundaries of metal grains and decrease in mechanical properties of the heat exchanger.

Soldering and covering the plate assembly with the copper-based alloy are provided in the second temperature zone at a temperature above the copper melting temperature but not higher than 1100°C, preferably within the range of 1050 to 1100°C. The temperature of 1050°C corresponds to the temperature at the exit of the first temperature zone and is equal to the temperature at the entrance to the second temperature zone. Process of soldering and covering the plate assembly actually starts at the temperature of 1083°C which corresponds to the copper melting temperature. Under presence of free hydrogen in the protective medium (exogas or endogas), copper salts and nickel salts are reduced to pure copper and nickel in the high-temperature through-type furnace. The copper-nickel alloy spreads over surfaces of the plates and fills all gaps and provides soldering the channel for passing a heat carrier and covering the plates with the copper-based alloy. Presence of nickel in the copper-based alloy decreases fluidity of the alloy, thus interfering with the alloy draining from surfaces of the plates. Since the stress in metal of the plates is relieved, copper does not penetrate between the grains. Copper diffuses into steel over a depth of 5 to 7 micrometers, which increases quality of soldering and improves strength properties of the product.

The upper temperature limit in the second temperature zone is defined regarding the fact that when the temperature is higher than 1100°C, copper may intensively drain from the plates, which may cause irregular texture of the coating.

The movement speed of the plate assembly in the high-temperature through-type furnace is set to be enough for annealing the plate assembly in the first temperature zone and for soldering and covering the plate assembly with the copper-based alloy in the second temperature zone. It has been found experimentally that the movement speed of the plate assembly should be within the range of 150 to 300 mm per second.

When the movement speed of the plate assembly is below 150 mm per second, the process is prolonged, which is unacceptable in a large-scale production environment.

When the movement speed of the plate assembly is more than 300 mm per second, the rate of rise of temperature of the plate assembly surfaces is such that intensive evaporation of ethylene glycol occurs almost simultaneously with decomposition of the copper hydrocarbonate, which is accompanied by intensive emission of water and gases and may cause detachment of the paste from the plates.

After the plate assembly has left the high-temperature through-type furnace, the plate assembly is cooled down in the cooling chamber of the high-temperature through-type furnace to a temperature not higher than 150°C, meanwhile the copper-based alloy solidifies and forms a firm and leak-tight joint of the channel for passing a heat carrier and coating of the plate assembly. When being cooled to a temperature higher than 150°C, the coating may have nonuniform dark color caused by oxidizing processes that take place at high temperature, thus appearance of the product may be impaired.

Finally, the plate heat exchanger undergoes hydraulic tests at the pressure of 36 atmospheres. Sustained operation of the heat exchanger is assured under the pressure of 24 atmospheres, and the heat exchanger itself is able to withstand hydraulic impact under the pressure of up to 60 atmospheres.

A plate heat exchanger manufactured according to the claimed method is notable for high quality and reliability during operation, which is ensured by careful preparation of the plate assembly for soldering as well as by providing temperature and atmospheric conditions for quality soldering and covering. The manufactured heat exchanger is virtually insusceptible to corrosion and can be used under various environmental conditions including corrosive environment, for a long time.

According to the claimed method, an additional cycle is provided in order to improve quality of the coating. Expediency of the additional cycle is caused by the fact that in spite of decontamination of surfaces of the plates, some traces of contaminants may occur on surfaces of the plates, which may cause irregular covering the plates in some areas.

In order to enable quality improvement after cooling, the soldered plate assembly is again immersed into a soldering paste solution based on copper hydrocarbonate and nickel salts, the solution being prepared by diluting the soldering paste with water to acquire a density thereof of 1.7 to 1.8 g/ccm. The density of the soldering paste solution is lower at this stage as the amount of the paste necessary for soldering has already been applied during the first cycle. After that, similar to the first cycle, the applied soldering paste solution is dried at a temperature not higher than 150°C, and the plate assembly is placed into the high-temperature through-type furnace. The plate assembly is additionally covered with the copper-based alloy at a temperature above the copper melting temperature but not higher than 1100°C in a protective medium containing free hydrogen. Since copper has already diffused into steel during the first pass through the through-type furnace, copper spreads over surfaces of the plates and fuses off all dimples and inclusions, thus providing a uniform and very corrosion resistant coating of the heat exchanger.

The additional cycle is usually performed in the same high-temperature through-type furnace, so temperature conditions thereof may be the same as for the main cycle.

When the plate assembly has left the high-temperature through-type furnace, the plate assembly is cooled down to a temperature not higher than 150°C, which cooling is expedient to be performed in the cooling chamber of the high-temperature through-type furnace.

When the additional cycle is performed, hydraulic tests under above-mentioned testing conditions are performed after completion of this cycle.

Particular examples of embodiments of the claimed method are described further.

### Example 1

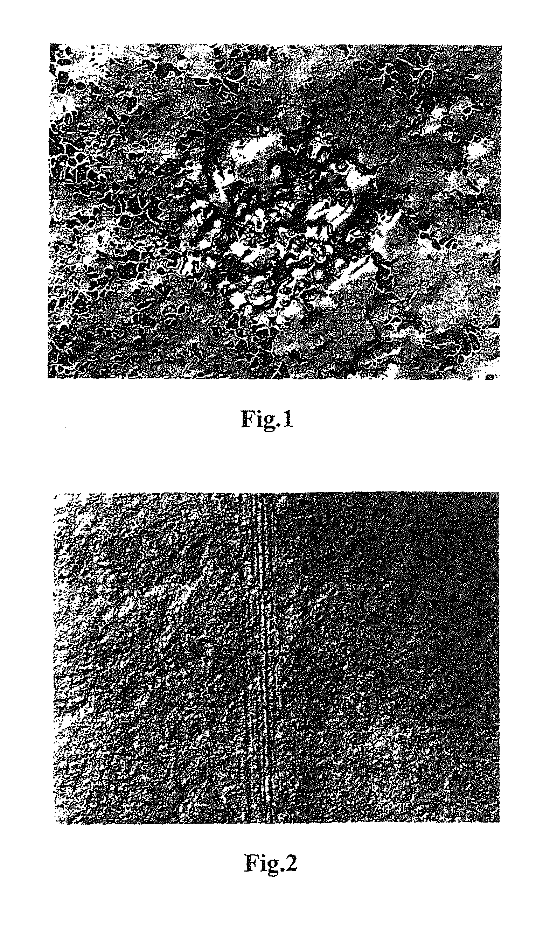

Plates are punched, in each of the plates two projections having the form of a hollow truncated cone are formed. The plates are cleaned using a composition based on an alkaline cleaner or an acid cleaner. A plate assembly is provided by consecutively mounting the projections of one plate into openings of an adjacent plate, wherein a predetermined gap between adjacent surfaces of the plates is maintained and a channel for passing a heat carrier is formed. A soldering paste solution based on copper hydrocarbonate and nickel salts is prepared by diluting the soldering paste until the density thereof of 1.9 g/ccm is obtained, and the plate assembly is immersed into the soldering paste solution. When the plate assembly is retrieved from the soldering paste solution, the applied soldering paste solution is dried at the temperature of 140°C. After drying, the plate assembly is transferred into a high-temperature through-type furnace in which a protective medium of exogas is provided, the protective medium containing CO 10%, CO₂ 0.1 %, H₂ 16%, CH₄ 1.5%, and in which two temperature zones are provided. The movement speed of the plate assembly is set to be equal to 210 mm per minute. In the first zone annealing and stress relieve in metal is performed at the temperature of 1000°C, the stress being caused by punching. In the second zone soldering and covering the plate assembly with a copper-based alloy are performed through reducing copper salts and nickel salts to pure copper and nickel at the temperature of 1095°C. The copper nickel alloy spreads over the surface of the metal, thus all gaps are filled and a 5 to 7 micrometers thick diffusion zone is formed in the area of soldering. The running time of the plate assembly within the high-temperature through-type furnace is 15 minutes. Further, the plate assembly is cooled down to the temperature of 50°C in the cooling chamber of the high-temperature through-type furnace, the cooling is carried out by passing through a zone within a water jacket for 50 minutes, wherein the temperature of water is 45°C, During that process copper solidifies and forms a firm and leak-tight joint of the plate assembly and a copper-based alloy coating on the plate assembly surfaces. Fig. 1 shows a scaled-up photograph of the copper-based alloy coating on the surface of the plate assembly, and it is apparent that some areas have dimples and irregularities. At the final stage the heat exchanger is tested for strength and leak tightness, wherein water under the pressure of 36 atmospheres is fed into dead-ended heat exchanger for 3 minutes.

### Example 2

The method is exercised mainly in the same manner as in Example 1 and is characterized by additional immersing, after cooling, the plate assembly into a water solution of the soldering paste with the density of 1.75 g/ccm (i.e. lower than in Example 1), because the amount of the paste necessary for leak-tight soldering has already been applied during the first pass through the high-temperature through-type furnace. Further, the applied soldering paste solution is dried, similar to Example 1, after that the plate assembly is placed into the high-temperature through-type furnace having a protective medium of exogas, and the plate assembly is additionally covered with the copper-based alloy at the temperature of 1100°C. Copper spreads over the surface and fuses off all dimples and inclusions, thus providing a uniform coating on the surface of the product as shown in Fig. 2. The heat exchanger having such a coating of the plate assembly surfaces is virtually insusceptible to corrosion and has the best thermal and operational performance.

### Industrial Applicability

The present invention may be used for manufacturing pipeless domestic convector heaters, heat exchangers of heating boilers, vehicle radiators, water coolers, oil coolers, heat exchangers of electric transformers and refrigerating units as well as other heat exchanging devices.

## Claims

1. A method for manufacturing a plate heat exchanger, including the following:
punching plates, in each of which at least one projection having the form of a hollow truncated cone is provided;
composing a plate assembly by consecutively mounting the projection of one plate into corresponding opening of an adjacent plate, wherein a predetermined gap between adjacent surfaces of the plates is maintained and a channel for passing a heat carrier is formed;
preparing a soldering paste solution based on copper hydrocarbonate and nickel salts, into which the plate assembly is immersed; and
placing the plate assembly with the applied soldering paste solution into a high-temperature through-type conveyor furnace in which soldering and covering the plate assembly with a copper-based alloy are performed during movement of the plate assembly,
**characterized by** comprising the following:
cleaning surfaces of each plate prior to composing the plate assembly;
drying the applied soldering paste solution prior to placing the plate assembly into the high-temperature through-type conveyor furnace;
providing a protective medium containing free hydrogen in the high-temperature through-type conveyor furnace; and
providing two temperature zones along the way of movement of the plate assembly, wherein annealing the plate assembly is performed in the first temperature zone, and soldering and covering the plate assembly with the copper-based alloy are performed in the second temperature zone.

2. The method of claim 1, **characterized in that** the soldering paste solution is prepared by diluting the soldering paste with water in order to acquire a density thereof of 1.85 to 1.95 g/ccm.

3. The method of claim 1, **characterized in that** drying the applied soldering paste solution is performed at a temperature not higher than 150°C.

4. The method of claim 3, **characterized in that** drying the applied soldering paste solution is performed in a forced-ventilation oven.

5. The method of claim 1, **characterized in that** annealing the plate assembly is performed in the first temperature zone at a temperature within the range of 950°C to 1050°C.

6. The method of claim 1, **characterized in that** covering the plate assembly with the copper-based alloy is performed in the second temperature zone at a temperature within the range above the copper melting temperature but not higher than 1100°C.

7. The method of claim 1, **characterized in that** cleaning the surfaces of each plate is performed using an alkaline cleaner or an acid cleaner.

8. The method of claim 1, **characterized in that** a movement speed of the plate assembly is set to be enough for annealing the plate assembly being performed in the first temperature zone and for covering the plate assembly with the copper-based alloy being performed in the second temperature zone.

9. The method of claim 8, **characterized in that** the movement speed of the plate assembly through the high-temperature through-type conveyor furnace is set to be within the range of 150 to 300 mm per minute.

10. The method of any claims from 1 to 9, **characterized in that** after soldering and covering the plate assembly with the copper-based alloy, the plate assembly is cooled down to a temperature not higher than 150°C in the cooling chamber of the high-temperature through-type conveyor furnace.

11. The method of claim 10, **characterized in that** after the cooling, the plate assembly is additionally immersed into a soldering paste solution based on copper hydrocarbonate and nickel salts, the soldering paste solution prepared by diluting the soldering paste with water to acquire a density thereof of 1.7 to 1.8 g/ccm, the applied soldering paste solution is dried at a temperature not higher than 150°C, the plate assembly is placed into the high-temperature through-type conveyor furnace in which a protective medium containing free hydrogen is provided and the plate assembly is additionally covered with the copper-based alloy at a temperature above the copper melting temperature but not higher than 1100°C.
